# EUROPEAN PATENT SPECIFICATION

(11) **EP 0 594 525 B1**
(45) Date of publication and mention of the grant of the patent: **17.12.1997**
(21) Application number: 93500144.6
(22) Date of filing: 19.10.1993
(51) Int. Cl.: A23N 1/00

(54) **Perfections to machines for squeezing citrus fruits**
Maschine zum Pressen von Zitrusfrüchten
Machine pour le pressage des agrumes

(30) Priority: 23.10.1992 ES 9202127
(43) Date of publication of application: 27.04.1994
(73) Proprietor: Olmos Font, Rafael, 46190 Ribarroja (ES)
(72) Inventor: Olmos Font, Rafael, 46190 Ribarroja (ES)
(74) Representative: Hernandez Covarrubias, Arturo

(56) References cited:
- EP-A- 0 343 488
- GB-A- 613 243
- GB-A- 1 050 407
- US-A- 2 975 810
- US-A- 5 188 021

## Description

The present invention relates to a number of perfections to machines for squeezing citrus fruits. These machines incorporate a high capacity "revolver" system in which the oranges or other pieces of fruit are placed. They also include an innovative mechanism for squeezing each piece of fruit, the extraction of the juice being carried out by means of a small vertical displacement whereby each half of the piece of fruit located in its respective alveolus presses against the corresponding squeezing cone.

By means of the perfections introduced by the present invention it is possible to achieve very clear fruit juices, taking full advantage of the fruit. Furthermore, said fruit juices can be obtained at room temperature or at colder temperatures.

Also the machine in question can be cleaned very easily since it can be assembled and disassembled quickly and easily without the need of any tools.

Moreover, it provides a high yield.

As a precaution, the machine in question comprises a transparent cover which, when it is removed, paralyses the squeezing mechanism.

### BACKGROUND OF THE INVENTION

Currently known orange squeezing machines are based on rotating drums provided with a number of alveoli which act together with cones which also rotate so as to squeeze the orange halves or other types of fruit which have been previously cut by a central blade.

Said squeezing cones rotate by means of a translation movement, the squeezing action being applied gradually to the orange half or other type of fruit.

These conventional machines do not take full advantage of the juices which can be obtained from the various types of fruit, and in some cases it is very difficult to gain access to their interiors for cleaning purposes.

European Patent No. 343488 shows a fruit juice automatic dispenser with the features of the preamble of claim 1, including a refrigerated unit for storing the fruit to be squashed, an assembly for cutting and squashing the individual citrus fruits, a station for removing a dose of squash, means for washing the squashing elements and for collecting the wash water and the peels of the citrus fruits and a control unit which controls the assemblies and is adapted to make them operate in succession when activated by a coin operated device.

The machine for squeezing citrus fruit according to this invention is of the type which includes a mechanism with two alveoli, an intermediate cutting blade located at a point where the two alveoli face each other upon rotation, two cones complementary to mentioned alveoli, the lower half of the trajectory of the alveoli having sliding ramps, the section of said sliding ramps facing the cones having windows, sleeves for containing the fruits, and a revolving load divider which rotates on a horizontal plane, to which the sleeves are connected, each of which has a fruit dispensing suspending cam in its lower part, allowing the passage of a piece of fruit which falls, due to the effect of gravity, through a window located in the sliding ramp, until the mentioned fruit reaches one of the alveoli, characterized in that the suspending cam pivots upon coming in contact with a stop, in that the alveoli have a pendular rotation of 180 degrees from a vertical position facing up to a vertical position facing down, means being provided effecting in this last position, a linear displacement of said alveoli towards the cones, and in that the windows have small flaps which effect a vertical descending/ascending movement following the configuration of the cones. For the alveoli to effect their vertical displacement, these are integrally connected to arms connected to axes which are guided by vertical grooves, the machine having a central groove which guides the sliding ramps, cutting blade and small flaps in their vertical displacement, the descending displacement being effected together with the alveoli, while the ascending displacement being slightly delayed with respect to the displacement of the alveoli.

In order that the present invention may be better understood, the accompanying drawings illustrate the object of the invention by way of a non limiting example.

### BRIEF DESCRIPTION OF THE DRAWINGS

Figure 1 shows an elevation view of a machine for squeezing citrus fruits in which a number of perfections have been incorporated according to the object of the invention.

Figure 2 shows a similar view to the one described above in which the machine in question is in the position for squeezing fruit.

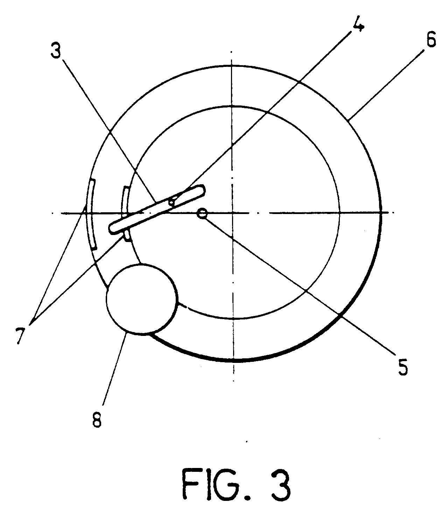

Figure 3 shows a plan view of a slide track forming part of the supply assembly, said track comprising a window through which pieces of fruit fall due to the effect of gravity towards the alveoli.

### DESCRIPTION OF A PREFERRED EMBODIMENT

Referring to the figures, the machines for squeezing citrus fruits in which a number of perfections have been incorporated comprise a supply assembly which consists of revolving load divider 1 to sleeves 2 for containing the pieces of fruit are coupled, said pieces of fruit being supported by dispensing suspending cams 3 which, when they come into contact with a stop or cam release 5, can pivot in a horizontal plane. Said cams 3 pivot about a small axis 4 connected to the revolving divider. Underneath is a slide track for the pieces of fruit provided with a supply window 7 and an unloading step 8.

The pieces of fruit located in the containing sleeves 2 fall one at a time due to the effect of gravity into one of the two alveoli 9, each of which has an integral rotating arm 10 connected to axes 11 which are guided by vertical grooves 12 in the housing 13 of the machine of the invention. As the revolving divider 1 is rotates by impulses, the corresponding dispensing cam 2 comes into contact with the stop 5 and allows one of the pieces of fruit to pass, said piece of fruit becoming settled on the unloading step 8 and the cam 3 returning to its initial position. The piece of fruit is then moved along to the window 7 through which it falls into one of the alveoli 9.

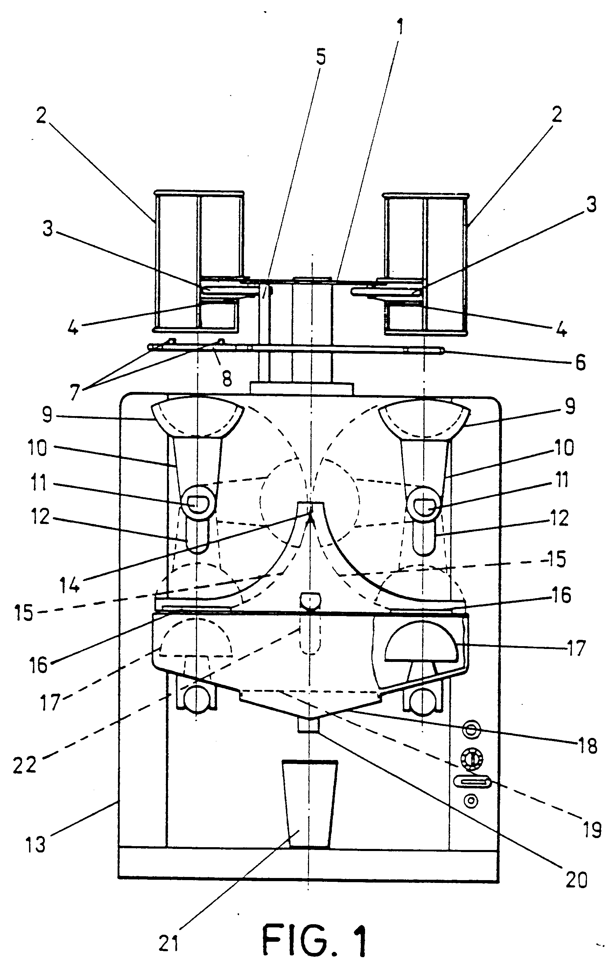

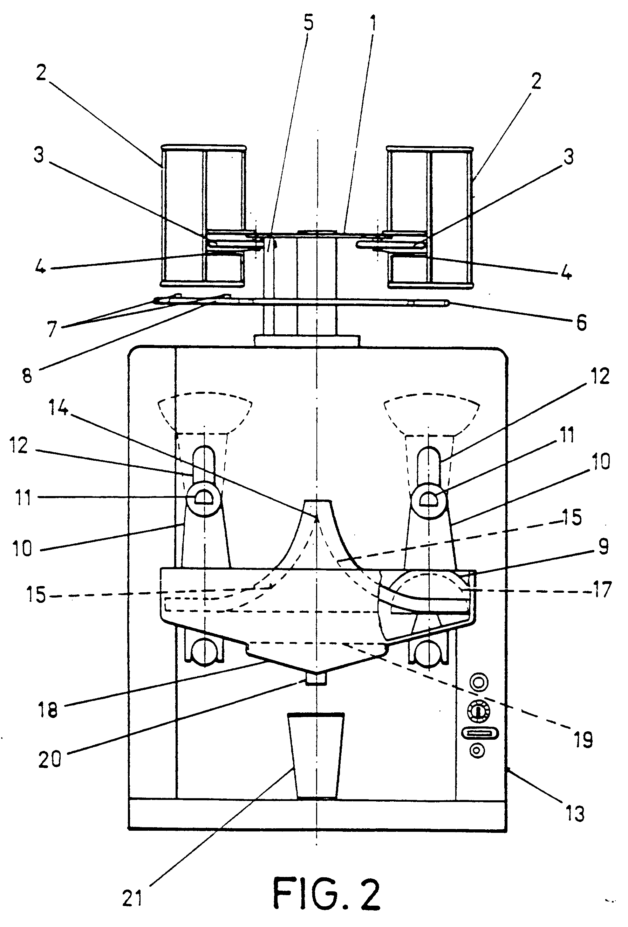

Starting in the uppermost position (figure 1), the alveoli 9 and the arms 10 rotate through 180° until they reach an lower, opposite position (figure 2) following a semicircular trajectory, and in such a way that when said alveoli 9 are facing each other the piece of fruit is cut through the middle by means of an intermediate blade 14, each of the two equal halves locating in the corresponding alveolus, and thereafter travel the remaining 90° of their circular trajectory along slip ramps 15, at the ends of which are circular windows 16 which face squeezing cones 17. Beneath said cones, and in a corresponding position thereto, is a tray 18 provided with a juice filter sieve 19, said tray comprising a small lower tube 20 through which the juice flows into a glass 21 or similar.

With this arrangement, when the alveoli 9 which contain the two halves of the piece of fruit are in the lower position facing the cones 17, and of course the circular windows 16, they descend vertically downwards together with the arms 10 and the axes 11, guided by the grooves 12, in such a way that the two halves of the piece of fruit are thoroughly squeezed by pressing against the cones 17, the juice thereby falling into the tray 18 and from there into the glass 21. The slip ramps 15, as well as the blade 14, are linked to the axes 11 and are guided by a central vertical groove 22 along which they follow the vertical movement of the arms 10, the alveoli 9 and the axes 11.

Once the juice has been extracted, the alveoli 9 rise upwards, the pieces of peel of the fruit resting over the circular windows 16. The ramps 15 rise in unison a certain amount of time after the alveoli, the delay being sufficient for the alveoli to cover at least half of the way to their initial position. After the alveoli 9 have risen, the arms 10 are made to rotate in the opposite direction until they reach their initial position where one of the alveoli 9 receives another piece of fruit which falls due to the effect of gravity from one of the containing sleeves 2. The same cycle is then repeated, said pieces of peel trapped over the circular windows being moved and ejected by means of the alveoli 9 themselves which run into said pieces of peel at the end of their trajectory.

The machine of the invention, which is provided with a manual or coin-operated cycle selector, can accept pieces of fruit of various sizes. Therefore, the windows 16 situated above the squeezing cones 17 are provided with small flaps which descend and rise, during both the fruit pressing cycle and the cycle in which the rind or peel is lifted for extraction, so that as they move they follow closely the profile or surface of the squeezing cone, thus preventing the fruit and peel from falling even in cases of large differences in size.

The cleaning process is easy since all the component parts which come into contact with the juice can be assembled and disassembled in a matter of seconds without the need of tools. Furthermore there are no corners in which the juice might ferment and become contaminated.

## Claims

1. Machine for squeezing citrus fruit, of the type which includes a mechanism with two alveoli (9), an intermediate cutting blade (14) located at a point where the two alveoli (9) face each other upon rotation, two cones (17) complementary to mentioned alveoli (9), the lower half of the trajectory of the alveoli (9) having sliding ramps (15), the section of said sliding ramps (15) facing the cones (17) having windows (16), sleeves (2) for containing the fruits, and a revolving load divider (1) which rotates on a horizontal plane, to which the sleeves (2) are connected, each of which has a fruit dispensing suspending cam (3) in its lower part, allowing the passage of a piece of fruit which falls, due to the effect of gravity, through a window (8) located in the sliding ramp (6), until the mentioned fruit reaches one of the alveoli (9), characterized in that the suspending cam (3) pivots upon coming in contact with a stop (5), in that the alveoli (9) have a pendular rotation of 180 degrees from a vertical position facing up to a vertical position facing down, means being provided effecting in this last position, a linear displacement of said alveoli (9) towards the cones (17), and in that the windows (16) have small flaps which effect a vertical descending/ascending movement following the configuration of the cones (17).

2. Machine according to claim 1, characterized in that, for the alveoli (9) to effect their vertical displacement, said alveoli (9) are integrally connected to arms (10) connected to axes (11) which are guided by vertical grooves (12), the machine having a central groove (22) which guides the sliding ramps (15), cutting blade (14) and small flaps in their vertical displacement, the descending displacement being effected together with the alveoli (9), while the ascending displacement being slightly delayed with respect to the displacement of the alveoli (9).

## Patentansprüche

1. Zitrusfruchtpresse mit zwei Mulden (9), einer zwischenliegenden Schneidklinge (14), die an einer Stelle plaziert ist, an der die zwei Mulden (9) nach einer Drehung einander gegenüberliegen, zwei zu den genannten Mulden (9) komplementäre Kegel (17), wobei die untere Hälfte der Trajetorie der Mulden (9) Rutschrampen (15) aufweist und der Sektor der Rutschrampen (15), der den Kegeln (17) zugewandt ist, Öffnungen (16) aufweist, Aufnahmehüllen (2) zum Aufnehmen der Früchte, und einen sich drehenden Beladungsverteiler (1), der in einer horizontalen Ebene dreht und mit dem die Aufnahmehüllen (2) verbunden sind, wovon jede in ihrem unteren Teil einen Nocken zur Früchteausgabe- und in Schwebehalten besitzt, der den Durchgang eines Fruchtstücks erlaubt, das aufgrund der Gewichtskraft durch eine in der Rutschrampe (6) plazierte Öffnung (8) fällt, bis die genannte Frucht eine der Mulden (9) erreicht, **dadurch gekennzeichnet, daß** der Nocken (3) solange verschwenkt, bis er an einen Anschlag (5) anstößt, daß die Mulden (9) eine Kippdrehung um 180° von einer aufwärtsgerichteten Vertikalstellung zu einer abwärtsgerichteten Vertikalstellung aufweisen, wobei Mittel vorhanden sind, die in der letzten Stellung eine lineare Verschiebung der Mulden (9) zu den Kegeln (17) hin bewirken, und daß die Öffnungen (16) kleine Klappen aufweisen, die eine der Konfiguration der Kegel (17) folgende absinkende/aufsteigende Vertikalbewegung bewirken.

2. Zitrusfruchtpresse nach Anspruch 1, dadurch gekennzeichnet, daß zur Herbeiführung der vertikalen Verschiebung der Mulden (9) die Mulden (9) integral mit Armen (10) verbunden sind, die mit Achsen verbunden sind, welche durch Senkrechtnuten (12) geführt sind, wobei die Presse eine Mittelnut (22) aufweist, die die Rutschrampen (15), die Schneidklinge (14) und die kleinen Klappen bei deren Vertikalbewegung führt, wobei die Absenkbewegung zusammen mit den Mulden (9) bewirkt wird, während die Aufsteigbewegung bezüglich der Verschiebung der Mulden (9) leicht verzögert ist.

## Revendications

1. Machine pour presser des agrumes, du type comprenant un mécanisme avec deux alvéoles (9), une lame coupante intermédiaire (14) située en un point où les deux alvéoles (9) se font face lorsqu'elles tournent, deux noyaux (17) complémentaires desdits alvéoles (9), la moitié inférieure de la trajectoire des alvéoles (9) ayant des rampes de glissement (15), la partie desdites rampes de glissement (15) faisant face aux noyaux (17) comportant des ouvertures (16), des manchons (2) pour contenir les fruits, et un diviseur de charge tournant (1) qui tourne en rotation sur un plan horizontal et auquel sont connectés les manchons (2), dont chacun est pourvu d'une came (3) de retenue et de distribution de fruit dans sa partie inférieure, permettant le passage d'un fruit qui tombe par gravité à travers une ouverture (8) située dans la rampe de glissement (6) jusqu'à ce que ledit fruit atteigne un des alvéoles (9), caractérisée en ce que la came de retenue (3) pivote lorsqu'elle vient en contact avec une butée (5), en ce que les alvéoles (9) ont une trajectoire de rotation pendulaire de 180 degrés à partir d'une position verticale d'orientation vers le haut, jusqu'à une position verticale d'orientation vers le bas, des moyens étant prévus, qui effectuent dans cette dernière position un déplacement linéaire desdits alvéoles (9) vers les noyaux (17), et en ce que les ouvertures (16) ont de petits volets qui effectuent un mouvement descendant/ascendant vertical en suivant la configuration des noyaux (17).

2. Machine selon la revendication 1, caractérisée en ce que, pour que les alvéoles (9) effectuent leur déplacement vertical, lesdits alvéoles (9) sont joints de façon monolithique avec des bras (10) connectés à des axes (11) qui sont guidés par des fentes verticales (12), la machine présentant une fente centrale (22) qui guide les rampes de glissement (15), la lame coupante (14) et les petits volets dans leur déplacement vertical, le déplacement vers le bas étant effectué de façon concomitante avec celui des alvéoles (9), tandis que le déplacement vers le haut est légèrement retardé par rapport à celui des alvéoles (9).
